# DEMANDE DE BREVET EUROPEEN

(11) **EP 1 394 525 A2**
(43) Date de publication de la demande: **03.03.2004**
(21) Numéro de dépôt: 03300100.9
(22) Date de dépôt: 28.08.2003
(51) Int. Cl.: G01M 11/00

(54) **Système pour le contôle par réflectométrie dans le domaine temporel (OTDR) d'un réseau optique**

(30) Priorité: 30.08.2002 FR 0210946
(71) Demandeur: Nexans, 75008 Paris (FR)
(72) Inventeur: RENARD, Xavier, 92600, ASNIERES SUR SEINE (FR); TOUYA, Alexandre, 75014, PARIS (FR)
(74) Mandataire: Feray, Valérie

(57) **Abrégé**

La présente invention concerne un système 10 pour le contrôle par réflectométrie dans le domaine temporel (OTDR) d'une pluralité de lignes 13 de fibres optiques d'un réseau de télécommunication, plus particulièrement adapté aux réseaux arborescents de type PON (Passive Optical Network). Ledit système comporte une pluralité de lignes 13 de fibre optique, un coupleur 7 ayant une entrée et une pluralité de sortie, chacune desdites sorties étant reliées à une ligne de ladite pluralité de lignes 13, ledit système 10 étant caractérisé en ce qu'il comporte des moyens 14 pour séparer chacune desdites lignes 13 en deux voies : une première voie 18 pour recevoir une première impulsion de contrôle correspond à un premier contrôle et une deuxième voie 19 pour recevoir une deuxième impulsion de contrôle correspondant à un deuxième contrôle, la longueur de ladite deuxième voie étant supérieure à la longueur de ladite première voie d'une surlongueur 15 prédéterminée, chacune desdites surlongueurs 15 étant différente pour chacune desdites lignes 13.

## Description

La présente invention concerne un système pour le contrôle par réflectométrie dans le domaine temporel (OTDR) d'une pluralité de lignes de fibres optiques d'un réseau de télécommunication, plus particulièrement adapté aux réseaux arborescents de type PON (Passive Optical Network).

Le débit d'informations transmis par les réseaux de télécommunication augmente continuellement. On utilise donc, dans ces réseaux, de plus en plus de fibres optiques qui permettent de satisfaire ces besoins en haut débit.

Pour chaque fibre optique installée, il convient de vérifier ses caractéristiques afin de s'assurer qu'elles répondent aux spécifications et qu'elles ne présentent pas d'atténuation trop importante ou de coupures.

Les dispositifs les plus courants pour effectuer ces vérifications sont des dispositifs utilisant la réflectométrie optique dans le domaine temporel usuellement appelée OTDR (Optical Time-Domain Reflectometer). Cette technique réflectométrique est aussi utilisée par l'opérateur afin de connaître la position d'un défaut et donc d'être plus efficace et plus rapide dans la réparation de son réseau.

Le principe de la technique OTDR est la détection et l'analyse, en fonction du temps, de la lumière rétrodiffusée par de petites imperfections et des impuretés présentes dans la fibre (phénomène connu sous le nom de rétro-diffusion Rayleigh), ainsi que de la lumière réfléchie dans la fibre (réflexion sur connecteurs, épissures...).
La méthode consiste à envoyer, à partir d'une extrémité de la fibre, une impulsion de courte durée qui se propage le long de celle-ci et de mesurer en fonction du temps la quantité de lumière qui est rétrodiffusée vers un détecteur. En effet, à cause des petites imperfections et des impuretés dans la fibre, une partie de la lumière se diffuse dans toutes les directions. Un détecteur ultra sensible mesure la quantité de lumière qui est rétrodiffusée, c'est à dire qui se déplace dans la direction opposée à celle de l'impulsion incidente. La connaissance de la quantité de lumière qui est à tout moment rétrodiffusée vers le détecteur permet de donner une mesure distribuée des pertes dans la fibre optique. Ainsi, une perte ou un défaut à un endroit déterminé de la fibre va entraîner une interruption transitoire de la monotonie de la courbe de Puissance Optique rétrodiffusée.

Dans le cas d'un réseau arborescent, tout comme dans le cas d'un réseau point à point, le système OTDR doit pouvoir localiser précisément les défauts qui apparaissent sur la ligne. Mais cette opération est rendue difficile sur un réseau arborescent parce que tous les signaux rétrodiffusés de toutes les lignes sont additionnés. En effet, même s'il est toujours aussi simple de mesurer la distance entre le défaut et l'OTDR, il est beaucoup plus difficile de dire sur quelles lignes les défauts sont apparus.

Une solution consiste à placer un miroir sélectif au bout de la ligne de chaque abonné, ledit miroir réfléchissant une longueur d'onde prédéterminée, par exemple 1625 nm. Chaque abonné est à une distance différente du détecteur du système OTDR. La présence de miroir entraîne la présence d'un pic de réflexion sur la courbe de Puissance Optique rétrodiffusée. La présence d'un défaut va se traduire par une interruption transitoire de la monotonie de la courbe de Puissance Optique rétrodiffusée indiquant la distance entre l'OTDR et le défaut. Mais avec cette seule indication, le défaut peut se trouver sur n'importe laquelle des fibres du réseau arborescent. C'est le pic de réflexion qui permet de déterminer la fibre sur laquelle se trouve le défaut. Un tel pic de réflexion fortement atténué ou inexistant indique la présence d'un défaut sur la ligne à laquelle est associé le miroir. Cette ligne est identifiée car chaque miroir est à une distance différente de l'OTDR.

Toutefois, la mise en oeuvre d'une telle solution pose certaines difficultés.

Il faut tout d'abord être sûr que chaque miroir est à une longueur différente sinon les pics de réflexion sont confondus et il n'est plus possible de distinguer deux branches. Cette condition n'est pas facile à respecter car il est difficile de connaître la longueur exacte de fibre à cause de toutes les surlongueurs stockées dans les baies ou dans les boîtiers.

En outre, lorsqu'un défaut apparaît sur deux lignes différentes, les défauts sont observés sur la courbe de l'OTDR. Deux interruptions transitoires de la monotonie de la courbe de Puissance Optique sont visibles. Ces deux défauts vont également entraîner la présence de deux pics atténués provenant de la réflexion des deux miroirs associés à chacune des deux lignes défectueuses. La présence des deux pics permet l'identification des deux lignes défectueuses. Cependant, il est difficile d'affecter chacune des deux interruptions transitoires de la monotonie de la courbe à la ligne défectueuse qui lui est associée et de déterminer ainsi la position du défaut sur la ligne défectueuse. Cette difficulté à localiser le défaut dans le cas de plusieurs lignes défectueuses est d'autant plus critique que les pertes sur chacune des deux lignes sont sensiblement égales.

La présente invention vise à fournir un système de détermination et de localisation de défauts par réflectométrie dans le domaine temporel (OTDR) dans un réseau comportant une pluralité de lignes de fibre optique, ledit système permettant, en cas de pluralité de défauts sur une pluralité de lignes défectueuses, de déterminer les lignes défectueuses et de localiser les défauts associés à chacune des lignes défectueuses et ce même si la longueur de fibre des différentes lignes est la même.

La présente invention propose à cet effet un système de détermination et de localisation de défauts par réflectométrie dans le domaine temporel dans un réseau comportant une pluralité de lignes de fibre optique à contrôler, ledit système comportant un coupleur ayant une entrée et une pluralité de sortie, chacune desdites sorties étant reliées à une ligne de ladite pluralité de lignes à contrôler, ledit système étant caractérisé en ce qu'il comporte des moyens pour séparer chacune desdites lignes à contrôler en deux voies :
- une première voie pour recevoir une première impulsion de contrôle correspond à un premier contrôle,
- une deuxième voie pour recevoir une deuxième impulsion de contrôle correspondant à un deuxième contrôle,
la longueur de ladite deuxième voie étant supérieure à la longueur de ladite première voie d'une surlongueur prédéterminée, chacune desdites surlongueurs étant différente pour chacune desdites lignes.

Grâce à l'invention, une première impulsion envoyée sur les premières voies de chaque ligne permet de dire si des défauts sont présents. La présence d'un défaut va se traduire par une interruption transitoire de la monotonie de la courbe de Puissance Optique rétrodiffusée, cette interruption se situant à l'emplacement du défaut. En cas de défaut, une deuxième impulsion est envoyée sur les secondes voies de chaque ligne. Chaque seconde voie a une surlongueur de fibre optique par rapport à la première voie. En outre, cette surlongueur est différente sur chaque ligne. Par conséquent, l'interruption transitoire de la monotonie de la courbe de Puissance Optique rétrodiffusée, détectée lors de la première mesure et associée au défaut, va se déplacer sur la courbe lors de la seconde mesure d'une longueur, égale à la surlongueur que la lumière aura traversée . Ainsi, la mesure du déplacement de l'interruption transitoire de la monotonie de la courbe donne la valeur de la surlongueur traversée. Or chaque ligne ayant une surlongueur différente il est très simple d'associer un défaut à une ligne et ce, indépendamment du fait qu'il y ait plusieurs défauts simultanés sur plusieurs lignes.

Comme la première mesure donne la distance entre l'OTDR et le défaut, le positionnement géographique du défaut devient possible, et un technicien peut se déplacer pour réparer le défaut.

Il existe plusieurs manières de générer la première et la deuxième impulsion.

Une première solution consiste à envoyer une impulsion à une certaine longueur d'onde test et qui se sépare en deux impulsions, une première impulsion passant dans la première voie et une deuxième impulsion passant dans la seconde voie. Dans un tel cas, la présence d'un défaut va se traduire par une triple interruption transitoire de la monotonie de la courbe de Puissance Optique rétrodiffusée, la première interruption se situant à un emplacement correspondant à la distance du défaut, la seconde se situant à un emplacement décalé d'une longueur égale à la surlongueur que la lumière aura traversée et la troisième se situant à un emplacement décalé d'une longueur égale à deux fois la surlongueur. Une telle solution permet de détecter le défaut avec une seule impulsion de test séparée en deux impulsions.

Une deuxième solution consiste à utiliser une impulsion à une première longueur d'onde qui passe uniquement dans la première voie et une deuxième impulsion à une deuxième longueur d'onde différente de la première longueur d'onde et qui passe uniquement sur la deuxième voie. Dans ce cas, il est nécessaire d'utiliser un démultiplexeur en longueur d'onde ou des filtres adéquats sur chacune des voies.

Enfin, le système selon l'invention est un système purement passif.

Avantageusement, ladite surlongueur est une surlongueur de fibre optique.

Selon un premier mode de réalisation, lesdits moyens pour séparer chacune desdites lignes en deux voies sont un démultiplexeur ayant au moins deux sorties.

Avantageusement, chacune desdites deux voies sont réunies sur ladite ligne dont elles sont issues par un multiplexeur ayant au moins deux entrées.

Selon un second mode de réalisation particulier, l'une desdites deux sorties est reliée à un dispostif absorbant saturable.

Selon un troisième mode de réalisation, lesdits moyens pour séparer chacune desdites lignes en deux voies sont un commutateur.

Selon un quatrième mode de réalisation, lesdits moyens pour séparer chacune desdites lignes en deux voies sont un coupleur ayant au moins deux sorties.

Avantageusement, chacune desdites deux voies sont réunies sur ladite ligne dont elles sont issues par un coupleur ayant au moins deux entrées.

La présente invention a également pour objet un procédé de détermination et de localisation de défauts par réflectométrie dans le domaine temporel (OTDR) dans un réseau comportant une pluralité de lignes de fibre optique utilisant le système selon l'invention caractérisé en ce qu'il comporte les étapes suivantes :
- envoi d'une impulsion à une première longueur d'onde sur ladite première voie,
- si un défaut est détecté, envoi d'une impulsion à une seconde longueur d'onde sur ladite deuxième voie.

Avantageusement ladite première longueur d'onde est différente de ladite seconde longueur d'onde.

La présente invention a en outre pour objet un procédé de détermination et de localisation de défauts par réflectométrie dans le domaine temporel dans un réseau comportant une pluralité de lignes de fibre optique utilisant un système selon l'invention caractérisé en ce que ledit procédé comporte les étapes suivantes :
- envoi d'une première impulsion à une longueur d'onde prédéterminée, ladite première impulsion ayant une puissance telle que ledit dispositif absorbant saturable est dans un état bloqué,
- si un défaut est détecté, envoi d'une deuxième impulsion à ladite longueur d'onde prédéterminée, ladite deuxième impulsion ayant une puissance telle que ledit dispostif absorbant saturable est dans un état passant.

La présente invention a également pour objet un procédé de détermination et de localisation de défauts par réflectométrie dans le domaine temporel dans un réseau comportant une pluralité de lignes de fibre optique utilisant un système selon l'invention caractérisé en ce que ledit procédé comporte une étape d'envoi d'une impulsion à une longueur d'onde prédéterminée, ladite impulsion se séparant en une première impulsion à ladite longueur d'onde prédéterminée sur ladite première voie et une deuxième impulsion à ladite longueur d'onde prédéterminée sur ladite deuxième voie.

La présente invention a également pour objet un réseau optique caractérisé en ce qu'il comporte :
- un dispositif à réflectométrie optique dans le domaine temporel pour l'envoi et l'analyse d'impulsion de contrôle,
- un coupleur ayant au moins une entrée et au moins deux sorties, l'entrée dudit coupleur étant adaptée pour recevoir une impulsion dudit dispositif à réflectométrie optique,
- au moins deux systèmes selon l'invention, chacun desdits deux systèmes ayant son entrée respective reliée à une sortie dudit coupleur,
- une pluralité de coupleurs, dits coupleurs d'abonné, chacune des sorties desdits deux systèmes étant reliées à une entrée d'un desdits coupleurs d'abonné et chaque sortie desdits coupleurs d'abonné étant reliée à un dispositif pour le filtrage en longueur d'onde, la longueur d'onde non filtrée étant différente pour chaque sortie d'un même coupleur d'abonné.

Avantageusement, ledit coupleur a une entrée et deux sorties, chacun desdits deux systèmes selon l'invention a une entrée et quatre sorties et chacun desdits coupleurs d'abonné a une entrée et quatre sorties.

La présente invention a enfin pour objet un procédé de détermination et de localisation de défauts par réflectométrie dans le domaine temporel dans un réseau selon l'invention caractérisé en ce qu'il comporte un envoi successif de quatre impulsions à quatre longueurs différentes, lesdites quatre longueurs d'onde correspondant respectivement aux longueurs d'onde non filtrées par lesdits dispositifs pour le filtrage en longueur d'onde.

D'autres caractéristiques et avantages de la présente invention apparaîtront dans la description suivante des modes de réalisation de l'invention, donnés à titre illustratif et nullement limitatif.

Dans les figures suivantes :
- La figure 1 représente schématiquement une architecture d'un réseau arborescent de type PON incorporant un système selon l'invention,
- La figure 2 représente schématiquement un système de détermination et de localisation de défauts par réflectométrie dans le domaine temporel (OTDR) selon un premier mode de réalisation de l'invention,
- La figure 3 représente schématiquement un système de détermination et de localisation de défauts par réflectométrie dans le domaine temporel (OTDR) selon un deuxième mode de réalisation de l'invention,
- La figure 4 représente schématiquement une architecture d'un réseau de type point à point incorporant un système selon l'invention,
- La figure 5 représente schématiquement un système de détermination et de localisation de défauts par réflectométrie dans le domaine temporel (OTDR) selon un troisième mode de réalisation de l'invention,
- La figure 6 représente schématiquement un système de détermination et de localisation de défauts par réflectométrie dans le domaine temporel (OTDR) selon un quatrième mode de réalisation de l'invention,
- La figure 7 représente schématiquement une architecture d'un réseau arborescent de type PON incorporant un système selon le quatrième mode de réalisation de l'invention,
- La figure 8 représente un dispositif de branchement final d'abonnés du type FDP (Final Drop Point en anglais) tel qu'utilisé dans l'architecture de la figure 7.

Dans toutes les figures, les éléments communs portent les mêmes numéros de références.

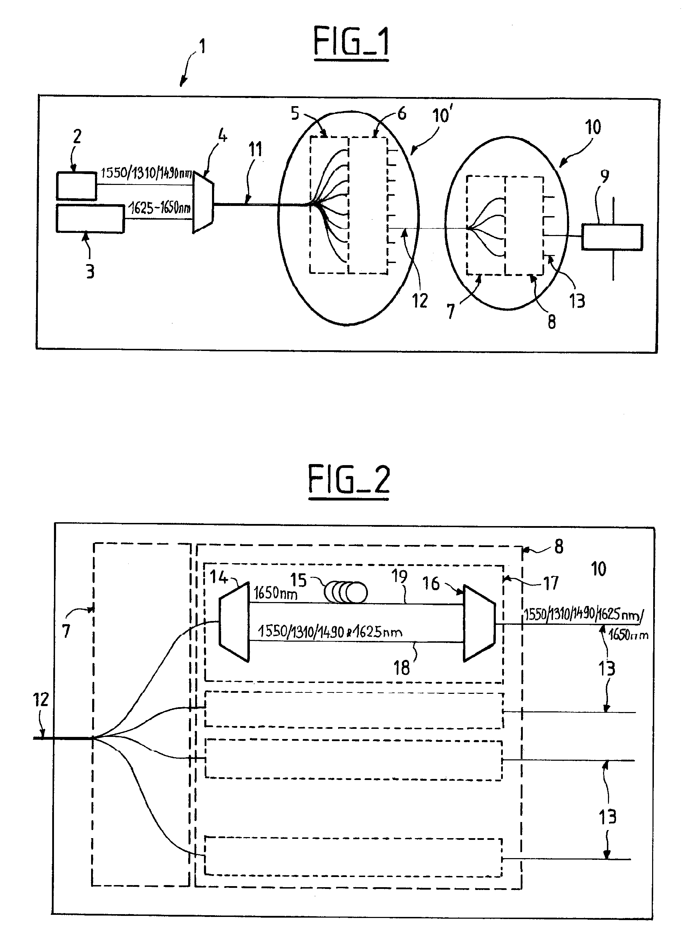

La figure 1 représente schématiquement une architecture d'un réseau 1 arborescent de type PON (Passive Optical Network) comportant deux systèmes 10 et 10' selon l'invention.

Le réseau 1 comporte :
- un office central 2,
- un système à réflectométrie optique dans le domaine temporel 3,
- un multiplexeur/démultiplexeur 4,
- un premier coupleur 5,
- des premiers moyens 6 d'adaptation de longueur,
- un deuxième coupleur 7,
- des deuxièmes moyens 8 d'adaptation de longueur,
- des terminaux d'abonné 9.

Le réseau 1 arborescent de type PON est un système point à multipoint permettant des échanges de données dans les deux sens entre l'office central 2 et les terminaux d'abonné 9 par le biais de fibres optiques 11 sur un trajet de l'ordre de vingt kilomètres. Les longueurs d'onde utilisées pour les signaux optiques lors de ces échanges sont généralement égales à 1310, 1490 et 1550 nm. Le plus souvent, les données sont transmises de l'office central 2 vers les terminaux 9 à 1550 nm par une technique de multiplexage à division de temps TDM (Time Division Multiplexing) ; les données sont transmises des terminaux 9 vers l'office central 2 à 1310 nm par accès multiple à répartition dans le temps TDMA (Time Division Multiple Access).

Le système à réflectométrie dans le domaine temporel 3 permet d'envoyer des impulsions de contrôle à des longueurs d'onde égales à 1625 et 1650 nm.

Le multiplexeur/démultiplexeur 4 reçoit sur ses deux entrées les données provenant de l'office central 2 et les impulsions provenant du système OTDR 3. La fibre 11 en sortie du multiplexeur/démultiplexeur 4 est divisée en huit lignes de fibre optique 12 par le premier coupleur 5 ; les huit lignes 12 rentrent dans les premiers moyens 6 d'adaptation de longueur.

Chacune des huit lignes 12 est ensuite divisée en quatre lignes de fibre optique 13 par le deuxième coupleur 7 ; les quatre lignes 13 rentrent dans les deuxièmes moyens 8 d'adaptation de longueurs puis sont reliées au terminal de l'abonné 9.

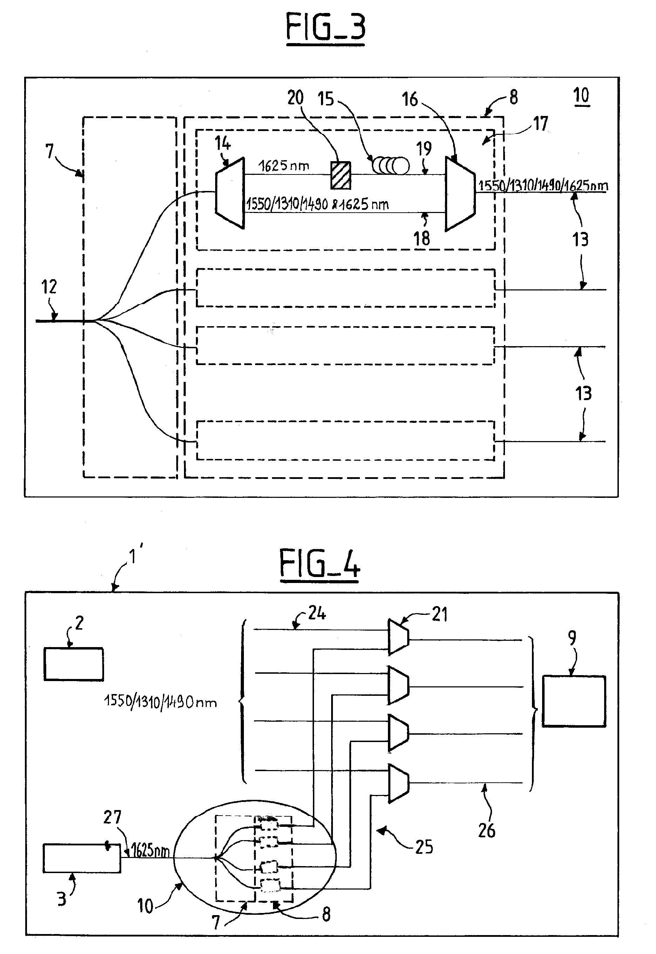

Le système 10 selon l'invention comporte le deuxième coupleur 7 et les moyens 8 d'adaptation de longueur et va être décrit plus précisément en relation avec les figures 2 et 3 qui constituent deux modes de réalisation de l'invention. Le système 10' selon l'invention comporte le premier coupleur 5 et les moyens 6 d'adaptation de longueur et est réalisé de façon identique au système 10.

La figure 2 représente schématiquement un système 10 de détermination et de localisation de défauts par réflectométrie dans le domaine temporel (OTDR) selon un premier mode de réalisation de l'invention.

Le système 10 selon l'invention comporte :
- un coupleur 7,
- des moyens 8 d'adaptation de longueur.

Les moyens 8 d'adaptation de longueur comportent quatre modules 17 d'adaptation de longueur.

Chacun desdits modules 17 comprend :
- un démultiplexeur 14 ayant une entrée et deux sorties,
- deux voies optiques 18 et 19, la voie 19 ayant une surlongueur de fibre optique 15,
- un multiplexeur 16 ayant deux entrées et une sortie.

La surlongueur 15 de fibre optique est différente pour chacun des modules 17 ; on peut prendre par exemple 10m, 15m, 20m et 25m de surlongueur pour chacun des modules 17.

Chacune des quatre sorties du coupleur 7 est reliée respectivement à l'entrée des démultiplexeurs 14 appartenant à un des modules 17.

Les deux sorties du démultiplexeur 14 sont reliées respectivement à la voie 18 et à la voie 19.

Les deux voies 18 et 19 sont reliées respectivement aux deux entrées du multiplexeur 16.

La voie 18 permet le transfert de signaux optiques à 1625, 1550, 1490 et 1310 nm.

La voie 19 permet le transfert de signaux optiques à 1650 nm.

Ainsi, en fonctionnement normal d'échange de données, les données optiques circulent uniquement sur la voie 18 qui autorise des longueurs d'onde égales à 1550, 1490 et 1310 nm.

Si une première impulsion laser de contrôle est envoyée à une longueur d'onde égale à 1625 nm, cette impulsion est également envoyée sur la voie 18 jusqu'à l'abonné.

Si un défaut est détecté par le système OTDR tel que représenté sur la figure 1, une seconde impulsion laser est envoyée à une longueur d'onde égale à 1650 nm. Cette seconde impulsion est orientée sur la voie 19 par le démultiplexeur 14. Ainsi l'impulsion laser à 1650 nm se propage le long d'une longueur de fibre supérieure à celle sur laquelle s'est propagée la première impulsion à 1625 nm.

Par exemple, un défaut détecté lors de la première mesure se traduit par une interruption transitoire de la monotonie de la courbe de la Puissance optique rétrodiffusée, cette interruption se situant à une longueur égale à 500 m. Cette première mesure indique la position du défaut sur la ligne défectueuse.

Lors de la seconde mesure utilisant une longueur d'onde de 1650 nm, cette interruption de monotonie se déplace d'une longueur égale à 15m et se trouve donc à 515 m. Cette longueur de 15 m correspond à une surlongueur associée à une ligne particulière parfaitement identifiée.

Ainsi, chacune des surlongueurs 15 étant différente pour chacun des modules 17, la mesure du déplacement de la discontinuité associée à la présence d'un défaut permet de déterminer la ligne 13 sur laquelle se trouve le défaut.

La figure 3 représente schématiquement un système 10 de détermination et de localisation de défauts par réflectométrie dans le domaine temporel (OTDR) selon un deuxième mode de réalisation de l'invention.

Le système 10 est identique à celui représenté en figure 2 à la différence que la voie 19 permet le transfert de signaux optiques à 1625 nm et comporte en série un dispositif absorbant saturable 20 qui devient passant au-delà d'une certaine puissance du signal reçu.

Ainsi, en fonctionnement normal d'échange de données, les données optiques circulent uniquement sur la voie 18 qui autorise des longueurs d'onde égales à 1550, 1490 et 1310 nm.

Si une première impulsion laser de contrôle à faible puissance est envoyée à une longueur d'onde égale à 1625 nm, cette impulsion est envoyée sur la voie 18 jusqu'à l'abonné. Cette impulsion à faible puissance est bloquée sur la voie 19 par l'absorbant saturable 20.

Si un défaut est détecté par le système OTDR tel que représenté sur la figure 1, une seconde impulsion laser à plus forte puissance est envoyée à une longueur d'onde égale à 1625 nm. Cette seconde impulsion à plus forte puissance se propage pour partie le long de la voie 19 en rendant passant l'absorbant saturable 20, et aussi sur la voie 18. Ainsi la deuxième impulsion laser se propage le long d'une longueur de fibre supérieure à celle sur laquelle s'est propagée la première impulsion.

Par conséquent, l'interruption de monotonie de la courbe de puissance optique rétrodiffusée associée à un défaut détecté lors de la première mesure va se déplacer lors de la seconde mesure grâce à la surlongueur 15.

Chacune des surlongueurs 15 étant différente pour chacun des modules 17, la mesure du déplacement de l'interruption transitoire de la monotonie permet de déterminer la ligne 13 sur laquelle se trouve le défaut.

Les modes de réalisation ont été décrits jusqu'à présent dans le cadre d'une architecture point à multipoint mais on peut également envisager, comme représenté en figure 4, une architecture 1' de réseau point à point comportant un système 10 selon l'invention.

Le réseau 1' comporte :
- un office centrale 2,
- un système à réflectométrie optique dans le domaine temporel 3,
- des lignes de données 24,
- une fibre optique 27,
- des lignes de contrôle 25,
- des multiplexeurs 21,
- un coupleur 7,
- des moyens 8 d'adaptation de longueur,
- des lignes d'abonné 26,
- des terminaux d'abonné 9.

Ce type de réseau 1' permet l'échange de données entre l'office central 2 et les terminaux d'abonné 9, l'office central 2 ayant autant de noeuds d'entrée qu'il y a de terminaux d'abonné 9, chaque noeud d'entrée étant relié à un terminal 9 par une ligne de données 24 multiplexée par un des multiplexeurs 21 sur la sortie duquel on trouve une ligne d'abonné 26. Les lignes de données 24 fonctionnent à des longueurs d'onde égales à 1550, 1490 et 1310 nm.

Le réseau 1' permet également le contrôle de fonctionnement des lignes d'abonné 26 via le système à réflectométrie optique dans le domaine temporel 3 relié par la fibre optique 27 fonctionnant à 1625 nm au coupleur 7. La fibre 27 est divisée en quatre lignes de contrôle 25 par le coupleur 7 ; les quatre lignes de contrôle 25 rentrent dans les moyens 8 d'adaptation de longueur.

Chacune des quatre lignes 25 est ensuite multiplexée sur un des multiplexeurs 21.

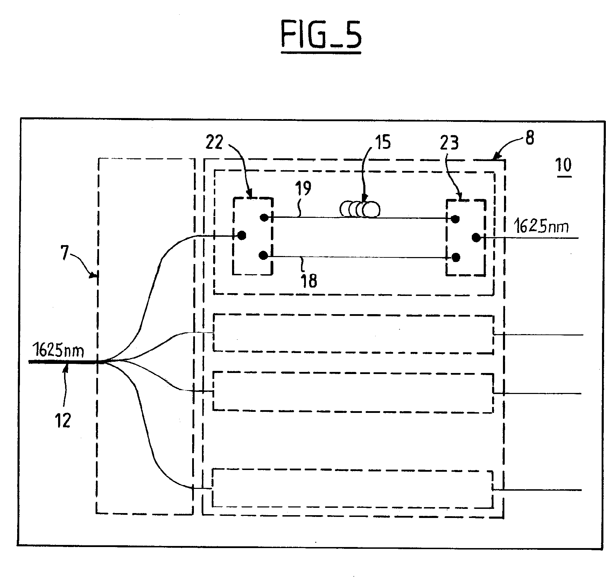

Le système 10 selon l'invention va être décrit plus précisément en relation avec la figure 5.

La figure 5 représente schématiquement un système 10 de détermination et de localisation de défauts par réflectométrie dans le domaine temporel (OTDR) selon un troisième mode de réalisation de l'invention adapté au réseau point à point.

Le système 10 tel que représenté en figure 5 est identique à celui représenté en figure 2 à la différence qu'il comporte un commutateur 22 commutant une entrée sur deux sorties à la place d'un démultiplexeur et un commutateur 23 commutant deux entrées sur une sortie à la place d'un multiplexeur.

Une première impulsion laser de contrôle est d'abord envoyée à une longueur d'onde égale à 1625 nm sur la voie 18 jusqu'à l'abonné grâce aux commutateurs 22 et 23.

Si un défaut est détecté par le système OTDR tel que représenté sur la figure 4, une seconde impulsion laser est envoyée à la même longueur d'onde égale à 1625 nm le long de la voie 19 en commutant les deux commutateurs 22 et 23. Ainsi la deuxième impulsion laser se propage le long d'une longueur de fibre supérieure à celle sur laquelle s'est propagée la première impulsion.

Par conséquent, l'interruption de monotonie de la courbe de Puissance optique rétrodiffusée associée à un défaut détecté lors de la première mesure va se déplacer lors de la seconde mesure grâce à la surlongueur 15.

Chacune des surlongueurs 15 étant différente pour chacun des modules 17, la mesure du déplacement du pic d'absorption permet de déterminer la ligne 13 sur laquelle se trouve le défaut.

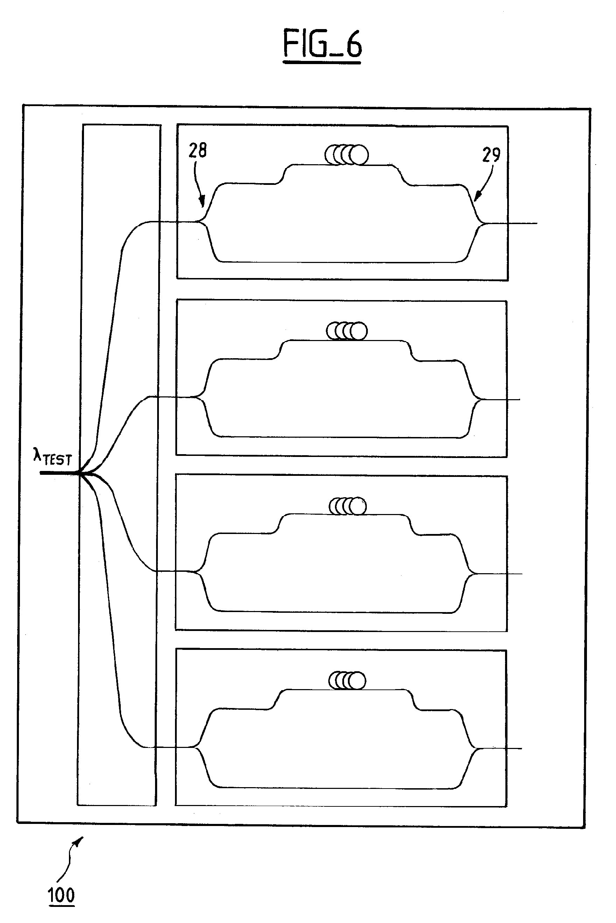

La figure 6 représente schématiquement un système 100 de détermination et de localisation de défauts par réflectométrie dans le domaine temporel (OTDR) selon un quatrième mode de réalisation de l'invention.

Le système 100 tel que représenté en figure 6 est identique au système 10 représenté en figure 2 à la différence que chacun des quatre modules d'adaptation de longueur comporte un coupleur 28 divisant une entrée sur deux sorties à la place d'un démultiplexeur et un coupleur 29 regroupant deux entrées sur une sortie à la place d'un multiplexeur.

L'utilisation du système 100 représenté en figure 6 consiste à envoyer une impulsion à une certaine longueur d'onde de test λ_{TEST} et qui se sépare en deux impulsions représentant chacune environ la moitié de l'impulsion de test. On a donc une première impulsion passant dans la première voie à λ_{TEST} et une deuxième impulsion passant dans la seconde voie à λ_{TEST}.

Dans ce cas, la présence d'un défaut va se traduire par une triple interruption transitoire de la monotonie de la courbe de Puissance Optique rétrodiffusée. La première interruption se situe à un emplacement correspondant à la distance du défaut, la seconde se situe à un emplacement décalé d'une longueur égale à la surlongueur que la lumière aura traversée et la troisième se situe à un emplacement décalé d'une longueur égale à deux fois la surlongueur. Une telle solution permet donc de détecter le défaut avec une seule impulsion de test séparée en deux impulsions.

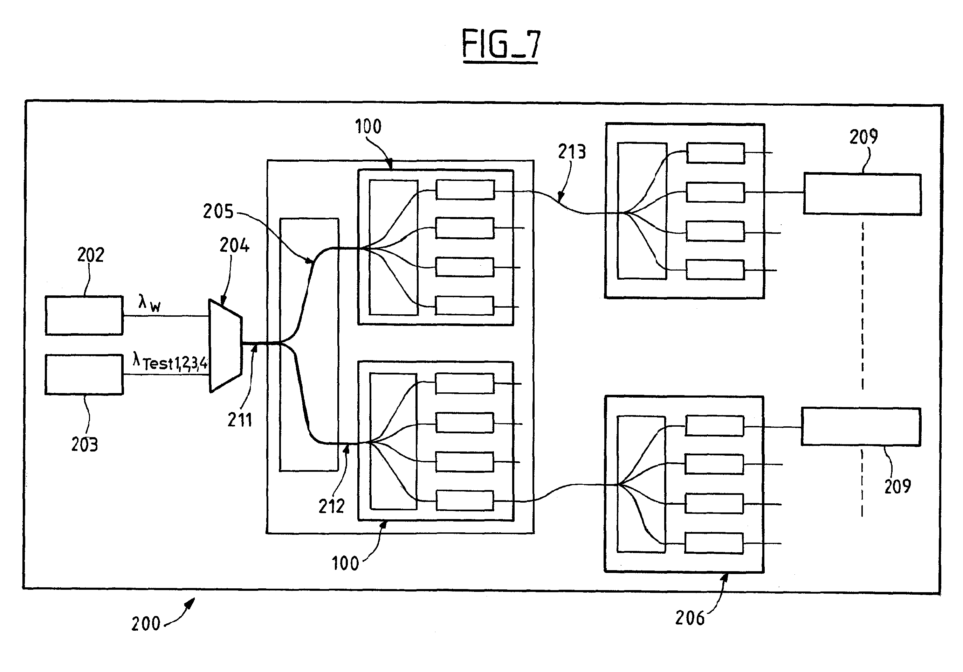

Le système 100 de la figure 6 sera avantageusement utilisé dans un réseau arborescent de type PON tel que représenté en figure 7.

La figure 7 représente schématiquement une architecture d'un réseau 200 arborescent de type PON (Passive Optical Network) comportant deux systèmes 100 tels que représentés en figure 6.

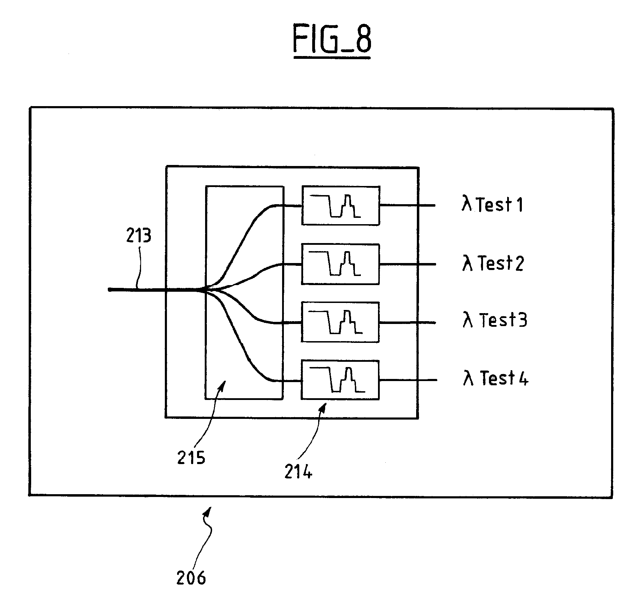

Le réseau 200 comporte :
- un office central 202,
- un système à réflectométrie optique dans le domaine temporel 203,
- un multiplexeur/démultiplexeur 204 à au moins deux entrées et au moins une sortie,
- un coupleur 205 à une au moins entrée et au moins deux sorties,
- deux systèmes 100 tels que représentés en figure 6 et correspondant à des branchements primaires d'abonnés du type PFP (Primary Flexibility Point en anglais),
- huit dispositifs 206 de branchement final d'abonnés du type FDP (Final Drop Point en anglais) à une entrée et quatre sorties qui seront décrits plus précisément en référence à la figure 8,
- 32 terminaux d'abonné 209.

Le réseau 200 arborescent de type PON est un système point à multipoint permettant des échanges de données dans les deux sens entre l'office central 202 et les terminaux d'abonné 209 par le biais de fibres optiques 211 sur un trajet de l'ordre de vingt kilomètres. Les données sont transmises de l'office central 202 vers les terminaux 209 à une longueur d'onde λ_{W} par une technique de multiplexage à division de temps TDM (Time Division Multiplexing) ; les données sont transmises des terminaux 209 vers l'office central 202 à une autre longueur d'onde par accès multiple à répartition dans le temps TDMA (Time Division Multiple Access).

Le système à réflectométrie dans le domaine temporel 203 permet d'envoyer des impulsions de contrôle à quatre longueurs d'onde de test λ_{TEST1}, λ_{TEST2}, λ_{TEST3} et λ_{TEST4}·

Le multiplexeur/démultiplexeur 204 reçoit sur ses deux entrées les données provenant de l'office central 202 et les impulsions provenant du système OTDR 203. La fibre 211 en sortie du multiplexeur/démultiplexeur 204 est divisée en deux lignes de fibre optique 212 par le premier coupleur 205 ; les deux lignes 212 rentrent dans les deux systèmes 100.

Chacune des huit lignes 213 de sortie des systèmes 100 rentrent ensuite dans les huit dispositifs 206 de branchement final d'abonnés du type FDP.

Chacune des 32 sorties des 8 dispositifs FDP 206 est reliée à un terminal d'abonné 209.

La figure 8 représente un dispositif 206 de branchement final d'abonnés du type FDP (Final Drop Point en anglais) à une entrée et quatre sorties.

Le dispositif 206 comporte :
- un coupleur d'abonné 215 à une entrée et quatre sorties de sorte que la ligne 213 d'entrée est séparée en quatre lignes 216,
- quatre filtres 214 permettant respectivement de laisser passer les longueurs d'onde λ_{TEST1}, λ_{TEST2}, λ_{TEST3} et λ_{TEST4}.

Ainsi, chaque ligne 216 permet de passer une seule longueur d'onde de test.

Bien entendu, chaque filtre permet également de laisser passer les longueurs d'onde de transmission de données λ_{W}.

Le réseau 200 tel que représenté en figure 7 permet une détermination et une localisation de défauts simple et efficace.

Quatre impulsions de test correspondant aux quatre longueurs d'onde λ_{TEST1}, λ_{TEST2}, λ_{TEST3} et λ_{TEST4} de test sont envoyées successivement.

Si le défaut se trouve entre les deux systèmes 100 et les dispositifs 206 FDP, chaque impulsion suffit à déterminer et localiser le défaut et va donner lieu à une triple interruption, la première interruption se situant à un emplacement correspondant à la distance du défaut, la seconde se situant à un emplacement décalé d'une longueur égale à la surlongueur que la lumière aura traversée et la troisième se situant à un emplacement décalé d'une longueur égale à deux fois la surlongueur.

Si le défaut se trouve entre les dispositifs FDP 206 et les abonnés 209, une seule des quatre impulsions de test va donner lieu à une triple interruption, la première interruption se situant à un emplacement correspondant à la distance du défaut, la seconde se situant à un emplacement décalé d'une longueur égale à la surlongueur que la lumière aura traversée et la troisième se situant à un emplacement décalé d'une longueur égale à deux fois la surlongueur. La connaissance de cette longueur d'onde suffit à déterminer la ligne d'abonné sur laquelle se trouve le défaut.

Bien entendu, l'invention n'est pas limitée aux modes de réalisation qui viennent d'être décrits.

On peut notamment, sans sortir du cadre de l'invention, modifier les longueurs d'onde utilisées ainsi que le nombre des entrées des coupleurs utilisés.

De plus, le second mode de réalisation a été décrit avec un absorbant saturable qui peut être remplacé par tout composant optique ayant un fonctionnement en mode fermé ou ouvert tel qu'un composant bi-stable.

En outre, le coupleur et les moyens d'adaptation de longueur peuvent être réalisés en un même module intégré, par exemple semiconducteur, sur lequel viennent se connecter les surlongueurs de fibre optique.

Enfin, les surlongueurs peuvent également être intégrées ou non au module et ne sont pas nécessairement des fibres optiques.

## Revendications

1. Système (10) de détermination et de localisation de défauts par réflectométrie dans le domaine temporel dans un réseau comportant une pluralité de lignes (13) de fibre optique à contrôler, ledit système (10) comportant un coupleur (7) ayant une entrée et une pluralité de sortie, chacune desdites sorties étant reliées à une ligne de ladite pluralité de lignes (13) à contrôler, ledit système étant **caractérisé en ce qu'**il comporte des moyens (14) pour séparer chacune desdites lignes (13) à contrôler en deux voies :
- une première voie (18) pour recevoir une première impulsion de contrôle correspond à un premier contrôle,
- une deuxième voie (19) pour recevoir une deuxième impulsion de contrôle correspondant à un deuxième contrôle,
la longueur de ladite deuxième voie étant supérieure à la longueur de ladite première voie d'une surlongueur (15) prédéterminée, chacune desdites surlongueurs (15) étant différente pour chacune desdites lignes (13).

2. Système (10) selon la revendication 1 **caractérisé en ce que** ladite surlongueur (15) est une surlongueur de fibre optique.

3. Système (10) selon l'une des revendications 1 ou 2 **caractérisé en ce que** lesdits moyens pour séparer chacune desdites lignes en deux voies sont un démultiplexeur (14) ayant au moins deux sorties.

4. Système (10) selon la revendication 3 **caractérisé en ce que** chacune desdites deux voies sont réunies sur ladite ligne dont elles sont issues par un multiplexeur (16) ayant au moins deux entrées.

5. Système (10) selon l'une des revendications 3 ou 4 **caractérisé en** l'une desdites deux sorties dudit démultiplexeur (14) est reliée à un dispositif absorbant saturable (20).

6. Système (10) selon l'une des revendications 1 ou 2 **caractérisé en ce que** lesdits moyens pour séparer chacune desdites lignes en deux voies sont un commutateur (22).

7. Système (100) selon l'une des revendications 1 ou 2 **caractérisé en ce que** lesdits moyens pour séparer chacune desdites lignes en deux voies sont un coupleur (28) ayant au moins deux sorties.

8. Système (100) selon la revendication 7 **caractérisé en ce que** chacune desdites deux voies sont réunies sur ladite ligne dont elles sont issues par un coupleur (29) ayant au moins deux entrées.

9. Procédé de détermination et de localisation de défauts par réflectométrie dans le domaine temporel dans un réseau comportant une pluralité de lignes de fibre optique utilisant un système selon l'une des revendications 1 à 8 **caractérisé en ce que** ledit procédé comporte les étapes suivantes :
- envoi d'une première impulsion à une première longueur d'onde sur ladite première voie,
- si un défaut est détecté, envoi d'une deuxième impulsion à une seconde longueur d'onde sur ladite deuxième voie.

10. Procédé de détermination et de localisation de défauts selon la revendication précédente **caractérisé en ce que** lesdites première et deuxième longueurs d'ondes de test sont différentes.

11. Procédé de détermination et de localisation de défauts par réflectométrie dans le domaine temporel dans un réseau comportant une pluralité de lignes de fibre optique utilisant un système selon l'une des revendications 1 à 8 **caractérisé en ce que** ledit procédé comporte une étape d'envoi d'une impulsion à une longueur d'onde prédéterminée, ladite impulsion se séparant en une première impulsion à ladite longueur d'onde prédéterminée sur ladite première voie et une deuxième impulsion à ladite longueur d'onde prédéterminée sur ladite deuxième voie.

12. Procédé de détermination et de localisation de défauts par réflectométrie dans le domaine temporel dans un réseau comportant une pluralité de lignes de fibre optique utilisant un système selon la revendication 5 **caractérisé en ce que** ledit procédé comporte les étapes suivantes :
- envoi d'une première impulsion à une longueur d'onde prédéterminée, ladite première impulsion ayant une puissance telle que ledit dispositif absorbant saturable est dans un état bloqué,
- si un défaut est détecté, envoi d'une deuxième impulsion à ladite longueur d'onde prédéterminée, ladite deuxième impulsion ayant une puissance telle que ledit dispostif absorbant saturable est dans un état passant.

13. Réseau optique (200) **caractérisé en ce qu'**il comporte :
- un dispositif (203) à réflectométrie optique dans le domaine temporel pour l'envoi et l'analyse d'impulsion de contrôle,
- un coupleur (205) ayant au moins une entrée et au moins deux sorties, l'entrée dudit coupleur étant adaptée pour recevoir une impulsion dudit dispositif (203) à réflectométrie optique,
- au moins deux systèmes (100) selon la revendication 8, chacun desdits deux systèmes (100) ayant son entrée respective reliée à une sortie dudit coupleur (205),
- une pluralité de coupleurs (214), dits coupleurs d'abonné, chacune des sorties desdits deux systèmes (100) étant reliée à une entrée d'un desdits coupleurs d'abonné (214) et chaque sortie desdits coupleurs d'abonné étant reliée à un dispositif pour le filtrage (214) en longueur d'onde, la longueur d'onde non filtrée étant différente pour chaque sortie d'un même coupleur d'abonné.

14. Réseau optique (200) selon la revendication précédente **caractérisé en ce que** :
- ledit coupleur (205) a une entrée et deux sorties,
- chacun desdits deux systèmes (100) selon la revendication 8 a une entrée et quatre sorties,
- chacun desdits coupleurs d'abonné (214) a une entrée et quatre sorties.

15. Procédé de détermination et de localisation de défauts par réflectométrie dans le domaine temporel dans un réseau selon la revendication 14 **caractérisé en ce qu'**il comporte un envoi successif de quatre impulsions à quatre longueurs différentes (λ_{TEST1}, λ_{TEST2}, λ_{TEST3}, λ_{TEST4}), lesdites quatre longueurs d'onde correspondant respectivement aux longueurs d'onde non filtrées par lesdits dispositifs (214) pour le filtrage en longueur d'onde.
